# EUROPEAN PATENT APPLICATION

(11) **EP 1 806 522 A2**
(43) Date of publication of application: **11.07.2007**
(21) Application number: 06022922.6
(22) Date of filing: 03.11.2006
(51) Int. Cl.: F16H 61/70, F16H 47/02

(54) **Mechanical/Hydrostatic drive with electronic control for agricultural vehicles and tractors**

(30) Priority: 04.11.2005 IT MI20052099
(71) Applicant: LAVERDA S.p.A., 36042 Breganza VI (IT)
(72) Inventor: Scarpetta, Silvio, 36042 Breganza (VI) (IT); Venturelli, Paolo, 42018 S. Martino In Rio (RE) (IT)
(74) Representative: Fisauli, Beatrice A. M.

(57) **Abstract**

This invention relates to a mechanical/hydrostatic drive specifically developed for agricultural vehicles such as tractors, telescopic lift devices and earth-moving machinery, said drive being designed to allow a change of speed range during motion and under load.

Said mechanical/hydrostatic drive is of the type comprising a mechanical range splitter coupled to a variable displacement hydrostatic motor/pump system, said system being designed to vary the speed range via said mechanical range splitter and to vary the transmission ratio continuously between zero and the maximum set by means of continuous variation of the displacement of said pump (13) and/or of said motor (11), which said motor (11) drives a primary shaft (14) of said range splitter, said range splitter being connected via an output shaft (15) to the wheels of said vehicle and is characterised in that said mechanical range splitter (12) is the powershift type with continuously meshed ratios, first means being installed to effect said range variation while the vehicle is moving and under load, through selective keying of said ratios, depending on the operating conditions of the vehicle.

## Description

This invention relates to a mechanical/hydrostatic drive specifically developed for agricultural vehicles such as tractors, telescopic lift devices and earth-moving machinery, said drive being designed to allow a change of speed range during motion and under load.

This type of vehicle usually has two or more transmission ratio ranges. In particular, within each range, hydrostatic drives produce a variable transmission ratio with continuity between motor and wheels.

Traditionally, the various speed ranges are obtained with a gear variator, and the transition from one range to another is effected while the vehicle is stationary, or at any rate not under load. This means that a speed range is first set according to the type of work to be performed; a continuous speed variator, based on a hydrostatic pump/variable-displacement hydrostatic motor system, then operates within each range.

The transition from one range to another is effected while the machine is stationary, or moving but not under load, because the use of a synchronised car-type gearbox would introduce sudden discontinuity in the transmission ratio, and above all there would be a short interval in which traction is lost. This is irrelevant in the case of cars, but is a source of problems in the case of vehicles operating under critical conditions such as on steep unsurfaced slopes, especially in the presence of mud.

The speed variation, effected with a pump/variable-displacement hydrostatic system, is continuous. The transmission ratio can be adjusted between zero and the maximum set, simply by varying the displacement of the pump and/or the motor. In practice, if the pump displacement is annulated there will be no oil movement, so the thermal motor will in practice be uncoupled from the drive, as if it were coupled to said drive via a coupling with the clutch disengaged.

In practice, the transmission ratio depends on the displacement of the pump and the hydrostatic motor: the greater the displacement of said pump and hydrostatic motor, the higher the variability range.

According to US patent 6227326, the displacement of the hydrostatic motor is preset to three different values, and continuous variation of the transmission ratio is obtained at each of these values (range) by varying the displacement of the pump alone.

This solution solves the problem of transition from one range of ratios to another without having to stop the vehicle; there is consequently no loss of traction. However, this system presents two major drawbacks compared with the traditional system using a mechanical range splitter.

The first drawback is that there is a significant reduction in the efficiency of the drive, because the entire transmission ratio is obtained hydrostatically.

The second drawback is that as the range variation is obtained with the hydrostatic motor, namely without a mechanical variator, the continuous speed variation within each range is effected entirely by the hydrostatic pump; this means that the pump and motor must be much larger than if said range variation were obtained mechanically. Said greater size is reflected in higher costs and larger overall dimensions.

This invention solves the problem described by using a combined mechanical and hydrostatic drive, as claimed in claim 1, wherein the speed ranges are obtained with a mechanical range splitter which offers high efficiency, said range splitter being designed to allow a range change without loss of traction and without sudden variations in transmission ratio, and being constituted by continuously meshed ratios, the keying of which is effected with electronically controlled clutches. The electronic management provides a transition from one range to another by graduating the release of one clutch and the engagement of another, and controlling the crossover between said release and said engagement to give a very gentle variation of overall transmission ratio and keep the traction as smooth as possible.

The first advantage of using a drive according to the invention is high mechanical efficiency, as the transmission ratio is not obtained with hydrostatic means only.

The invention will be described by reference to its application to a telescopic lift vehicle. One skilled in the art could easily transfer the concepts illustrated herein to other types of vehicle.

The invention will now be described according to a preferred embodiment, by way of example but not of limitation, with reference to the annexed figures, wherein:
- figure 1 shows a telescopic lift vehicle;
- figure 2 shows a diagram of the drive of said telescopic lift vehicle;
- figure 3 is an enlargement of the mechanical/hydrostatic assembly according to the invention;
- figure 4 shows a diagram of the mechanical/hydrostatic drive according to the invention;
- figure 5 shows a flow chart which describes the behaviour of the machine during a range change.

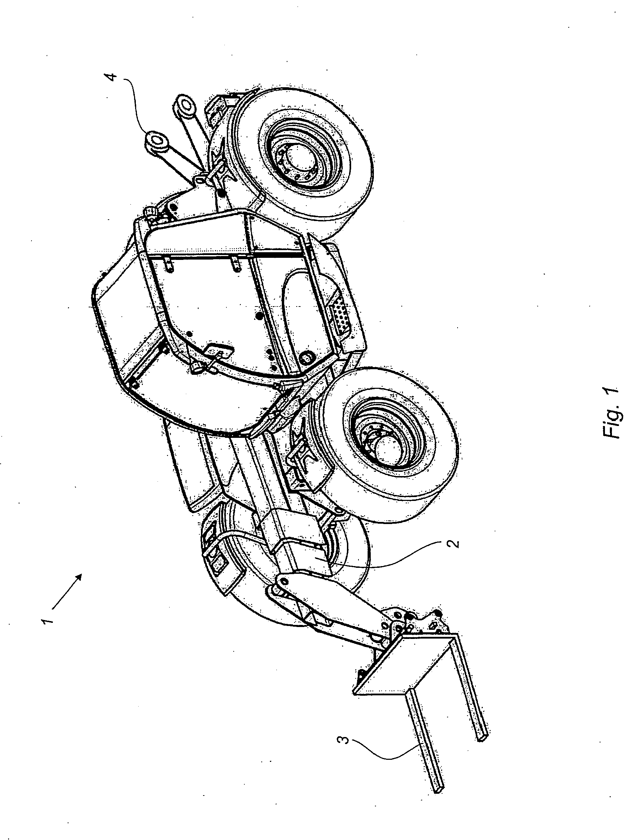

Fig. 1 shows a work vehicle (1) equipped with a telescopic lift arm (2), to which forks (3) and a three-point hydraulic lift device (4) have been added, so that it can be used as a fork-lift truck to handle various materials and/or as an agricultural tractor.

A vehicle of this kind usually has four-wheel drive, so that the necessary traction is always available, even under particularly critical conditions, such as when working on steep slopes or in the presence of mud and/or ice.

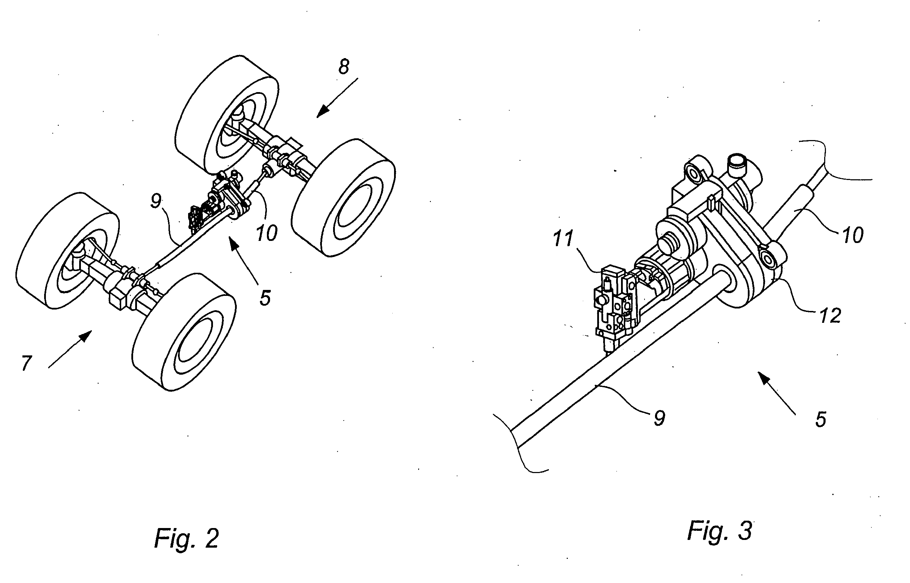

Fig. 2 shows the drive of said work vehicle which comprises a mechanical/hydraulic unit (5) according to the invention, which said unit is connected to the front (7) and rear (8) axles via drive shafts (9) and (10) respectively.

Fig. 3 shows an enlargement of the mechanical/hydraulic unit (5) according to the invention which comprises a hydrostatic motor (11) of known type with variable displacement, connected mechanically to a mechanical powershift range splitter (12).

The output from mechanical range splitter (12) consists of said drive shafts (9) and (10) which transmit motion to the front (7) and rear (8) axles respectively.

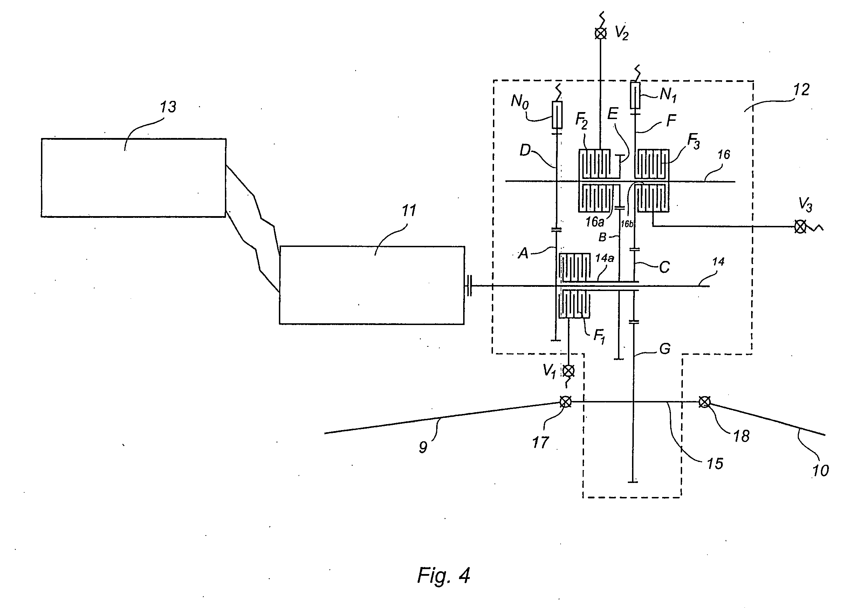

Hydraulic motor (11) is the variable displacement type, and is connected hydraulically to a variable-displacement hydrostatic pump (13) of known type shown in the diagram in fig. 4.

Said mechanical range splitter (12) comprises a primary shaft (14), which takes motion directly from hydraulic motor (11), and an output shaft (15) which receives motion from said primary shaft (14) via a secondary shaft (16) and a plurality of gears, as described below, said output shaft (15) being connected via Cardan joints (17) and (18) to said drive shafts (9) and (10) respectively.

A cylindrical gear **A** is keyed to said primary shaft (14), while two gears **B and C** are keyed to a hollow shaft (14a) mounted idle on primary shaft (14), said shafts (14) and (14a) being rendered integral by a first multiple-disc clutch **F₁,** controlled by a first proportional valve **V₁,** which controls their closing pressure.

A cylindrical gear **D** is keyed to said secondary shaft (16), and a gear **E** is keyed to a first hollow shaft (16a), fitted idle on secondary shaft (16), while a gear **F** is keyed to a second hollow shaft (16b), also fitted idle on secondary shaft (16), said first (16a) and second (16b) hollow shafts being rendered integral with said secondary shaft (16) by a second and third multiple-disc clutch **F₂** and **F₃** respectively, controlled by a second and third proportional valve **V₂** and **V₃,** which control its closing pressure.

Moreover, gear **A** is constantly engaged with gear **D,** gear **B** with gear **E,** and gear **C** with gear **F.**

Said gear **C** also engages with a gear **G,** keyed to said output shaft (15).

A reader **N₀** and a reader **N₁** act on said gears **D** and **F** respectively, detecting the rotation speed of said gears **D** and **F** respectively, which are constantly engaged with gears **A** and **G** respectively so that in practice, they measure the rotation speed of primary shaft (14) and output shaft (15) respectively.

The three speed ranges are obtained by suitably operating the three clutches F₁, **F₂** and **F₃,** which are normally disengaged.

The first speed range is obtained by operating clutch **F₂:** in this way hollow shaft (16a) is rendered integral with secondary shaft (16) and the movement passes from primary shaft (14) to output shaft (15) through gears **A, D, E, B, C** and **G.**

The second speed range is obtained by operating clutch **F₁:** in this way hollow shaft (14a) is rendered integral with primary shaft (14) and the movement passes directly from primary shaft (14) to output shaft (15) via gears **C** and **G.**

The third speed range is obtained by activating clutch **F₃:** in this way hollow shaft (16b) is rendered integral with secondary shaft (16), and the movement passes from primary shaft (14) to output shaft (15) via gears **A, D, F, C** and **G.**

To obtain gradual engagement and always maintain an optimum level of traction, clutches **F₁, F₂** and **F₃** must always be operated gradually. In other words, during the transition from one range to another, the clutch to be disengaged must be operated gradually so as not to leave the vehicle without traction, while the clutch to be engaged must also be operated gradually to prevent sudden variations in traction. Moreover, as the two operations are performed simultaneously, during the change of range the motion will tend to pass simultaneously on two different routes, with different transmission ratios. This means that a conflict occurs, which must be managed by means of a thorough slippage control.

The rotation speed of primary shaft (14) and output shaft (15) are detected by the two sensors **N₀** and **N₁** respectively. The signals issued by the two sensors are processed to determine the operating procedure of the clutches involved in the operation. In other words, the release of one clutch and engagement of another must take place in such a way that under the current loading conditions the speed of output shaft (15), and consequently the vehicle, varies with the desired degree of regularity.

The drive control is performed via modular controllers acting on the motor and the drive, which interact with one another via a CAN-bus communication system.

Said modular controllers (ECU for the motor and NFPE for the drive) handle specific functions for the control of the unit to which they are dedicated, and also, via the CAN-bus communication system, optimise the transfer of motion from the endothermic motor to the wheels and vice versa, under all possible operating conditions.

For an agricultural vehicle, this function is particularly delicate, because the drive needs to take place without jolts or jerks, while the drive wheels must never lose traction.

This is made possible by the presence of the two sensors **N₀** and **N₁,** which detect the rotation speed of primary shaft (14) and output shaft (15) respectively, and by the presence of the three proportional valves **V₁, V₂** and **V₃,** which control the closing pressure of multiple hydraulic clutches **F₁, F₂** and **F₃** respectively, which provide the three different selectable speed ranges.

The modular controller of powershift range splitter (12) collects the information received from the speed sensors, and if it detects that the speed difference between the primary shaft (14) and output shaft (15) is within pre-set acceptable limits, it regulates the operating pressures of the clutches involved in the range change, to give preset opening and closing times.

By acting on the range of pressure variation (upward or downward), said controller limits their slippage within the acceptable limits pre-set by the manufacturer, to prevent damage from being caused by overheating.

The accuracy with which the calibration is performed allows one clutch to open fully at the exact moment when the other one closes, to prevent loss of traction and to prevent irritating and inappropriate jolts of the vehicle during range changes while traversing.

However, this requires the range set to be compatible with the transfer speed, as the operating times of the valves involved in the operation of the corresponding clutches would otherwise be too long, and the clutches would undergo excessive stress. Thus if the command to vary the range is activated, as the speed of the vehicle is too high or too low, the system will react in one of the three following ways, possibly selectable in advance by the operator, according to his/her preferences:
- the command is ignored;
- the command is stored for a pre-set time, e.g. 3 to 5 seconds, after which it is rejected if the conditions required for a correct range change are not yet present;
- the command is stored and the actual range change takes place as soon as the vehicle reaches the conditions compatible with the pre-set range (vehicle speed, motor speed, displacement and rpm of pump and hydrostatic motor) .

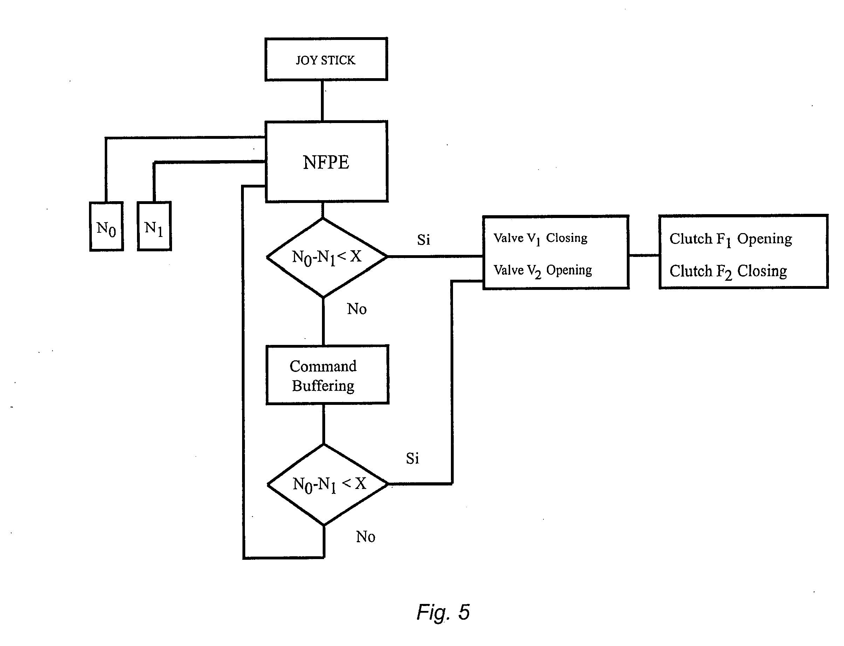

Fig. 5 contains a flow chart which describes the behaviour of the vehicle during a range change, such as the transition from the first to the second range.

The NFPE controller receives input from the two sensors N₀ and N₁ which detect the rotation speed of primary shaft (14) and output shaft (15) respectively, and check whether the difference in speed between primary shaft (14) and output shaft (15) is below a value **X** pre-set on the basis of the operating conditions. When the NFPE controller receives from the operator, via a joystick, a command to change from the first to the second range, for example, if said difference of speed between primary shaft (14) and output shaft (15) is below said value X, the range change will be performed via closing of valve V₁ and opening of valve V₂, which causes opening of clutch F₁ and closing of clutch **F₂** respectively. If the difference is not below said value, the command set by the operator is stored, and as soon as the NFPE controller detects that the difference in speed between the two shafts is less than said pre-set value **X,** it effects the change of range via the said operation on valves **V₁** and **V₂.**

If, after a suitable period of time, said condition has not been achieved, the command is cancelled and control remains with the NFPE controller, which continues to monitor the rotation speed of primary shaft (14) and output shaft (15), pending a new input from the operator.

Opportunely, the system will advise the operator if the range change has been accepted or not.

In the case of reversing, gradualness is not managed by the powershift range splitter drive controller, but by the hydrostatic drive controller, by means of a gradual reversal of the direction of inclination of the control plate of the pistons of hydrostatic pump (13).

In practice, the displacement of pump (13) or motor (11) is gradually reduced, until oil circulation ceases, due to the variation of inclination of the piston drive plate, thus causing the vehicle to stop. At this point, if the operation on the piston drive plate continues, the oil changes direction of circulation, and the vehicle restarts in the opposite direction.

Once again the process is controlled by proportional valves which control the pressures in the positioning cylinders of the plate which governs the variation in pump displacement.

Said proportional valves which control the plate positioning cylinders can provide variable pressure variation ramps depending on the range selected in the powershift, so that the behaviour of the vehicle is always optimum, whatever its reverse speed.

Once the reverse procedure has begun, a subsequent range change is only possible when the reversing phase has terminated. Similarly, once the range change procedure has begun, a subsequent reverse is only possible when the range change phase has terminated.

This occurs because the modular controllers of the various components of the drive unit interact with one another through the CAN-bus to optimise the behaviour of the vehicle in different situations.

The solution adopted, namely to have the controllers of a number of drive components dialogue with one another via the CAN-bus network, also provides considerable advantages in terms of safety.

The software therefore:
- limits the maximum speed of the vehicle under the specific operating conditions;
- prevents excessive range changes (e.g. from third to first);
- limits the reversing speed of the vehicle.

This also has a considerable impact on fuel consumption, because an optimised, electronically controlled system reduces implementation times and better modulates the operation of the motor. In parallel with the reduction of consumption, there will obviously also be benefits regarding harmful emissions, with the global aim of minimising atmospheric impact.

Optimisation of the drive, high efficiency and optimum working conditions also contribute to energy saving in terms of lubricant oil, filters and wear on the vehicle system, together with noise reduction and a lower operating temperature.

The innovation has been described by way of example but not of limitation, according to a preferred form of embodiment. One skilled in the art could devise numerous other embodiments, all of which fall into the ambit of protection of the following claims.

## Claims

1. Mechanical/hydrostatic drive for agricultural vehicles such as tractors, telescopic lift devices and earth-moving machinery, driven by a thermal motor, of the type comprising a mechanical range splitter coupled to a variable displacement hydrostatic motor/pump system, said system being designed to vary the speed range via said mechanical range splitter and to vary the transmission ratio continuously between zero and the maximum set by means of continuous variation of the displacement of said pump (13) and/or of said motor (11), which said motor (11) drives a primary shaft (14) of said range splitter, said range splitter being connected via an output shaft (15) to the wheels of said vehicle, **characterised in that** said mechanical range splitter (12) is the powershift type with continuously meshed ratios, first means being installed to effect said range variation while the vehicle is moving and under load, through selective keying of said ratios, depending on the operating conditions of the vehicle.

2. Mechanical/hydrostatic drive as claimed in claim 1, **characterised in that** said first means designed to effect said range variation, with the machine moving and under load, through selective keying of said ratios, depending on the operating conditions of the vehicle, include a clutch coupling (**F₁, F₂, F₃**) for each speed range, second means being fitted to operate said clutches (F₁, **F₂, F₃)** gradually, to prevent sudden variations in transmission ratio.

3. Mechanical/hydrostatic drive as claimed in claim 2, **characterised in that** said second means designed to operate said clutches **(F₁, F₂, F₃)** gradually, so as to prevent sudden variations in transmission ratio, comprise a pair of sensors **N₀** e **N₁** designed to detect the rotation speed of said primary shaft (14) and output shaft (15) respectively and of proportional valves **(V₁, V₂, V₃)** designed to manage said clutches **(F₁, F₂, F₃)** respectively, third means being fitted to process the signals issued by said sensors **N₀** and **N₁,** and to act on the pressure variation range (upward or downward) to limit the slippage of said clutches **(F₁, F₂, F₃)** within pre-set limits.

4. Mechanical/hydrostatic drive as claimed in claim 3, **characterised in that** said third means designed to process the signals issued by said sensors N₀ and **N₁** and to act on the pressure variation range (upward or downward) to limit the slippage of said clutches **(F₁, F₂, F₃)** within pre-set limits comprise modular controllers (ECU for said thermal motor and NFPE for said drive), interacting with one another via a CAN-bus communication system, said modular controllers being designed to optimise the transfer of motion from the thermal motor to the wheels and vice versa in all possible operating conditions, collecting the information originating from said sensors **N₀** and **N₁** and regulating the drive pressures of the clutches involved in the range change, to give pre-set opening and closing times.

5. Mechanical/hydrostatic drive as claimed in claim 1, **characterised in that** said first means designed to effect said range variation, with the machine moving and under load, through selective keying of said ratios, depending on the operating conditions of the vehicle, include a clutch coupling (F₁, F₂, F₃) for each speed range, fourth means designed to determine the correct operating times of said clutches **(F₁, F₂, F₃)** being fitted.

6. Mechanical/hydrostatic drive as claimed in claim 5, **characterised in that** said fourth means designed to determine the correct operating times of said clutches **(F₁, F₂, F₃)** comprise said NFPE controller which receives input from said two sensors **N₀** and **N₁,** which detect the rotation speed of primary shaft (14) and output shaft (15) respectively, and calculate whether the difference in speed between primary shaft (14) and output shaft (15) is below a pre-set value **X** based on the operating conditions.
